# EUROPÄISCHE PATENTSCHRIFT

(11) **EP 0 711 945 B1**
(45) Veröffentlichungstag und Bekanntmachung des Hinweises auf die Patenterteilung: **17.02.1999**
(21) Anmeldenummer: 95117200.6
(22) Anmeldetag: 02.11.1995
(51) Int. Cl.: F16L 5/04, A62C 2/06

(54) **Rohrmanschette zum Abschotten von durch Wände oder Decken hindurchführenden Rohren**
Pipe sleeve for the partition of pipes passing through walls or ceilings
Manchon de tuyau pour le cloisonnement de tuyaux traversant des parois ou des plafonds

(30) Priorität: 12.11.1994 DE 9418172 U
(43) Veröffentlichungstag der Anmeldung: 15.05.1996
(73) Patentinhaber: Friatec Aktiengesellschaft, 68229 Mannheim (DE)
(72) Erfinder: Züll, Armin, D-74177 Bad Friedrichshall (DE)
(74) Vertreter: Schmitt, Meinrad, Dipl.-Ing.

(56) Entgegenhaltungen:
- EP-A- 0 486 299

## Beschreibung

### TECHNISCHES GEBIET

Die Erfindung betrifft eine Rohrmanschette zum Abschotten von durch Wände oder Decken hindurchführenden Rohren. Diese Wände oder Decken stellen brandabschnittsbegrenzende Bauteile dar.

Aufgrund baurechtlicher Bestimmungen müssen größere Gebäude in Brandabschnitte unterteilt werden. Dabei besteht das Problem, daß elektrische Kabel und Leitungen durch die Brandabschnitte hindurchgeführt werden müssen, so daß die einzelnen Brandabschnitte innerhalb eines Gebäudes über diese Leitungen oder Rohre miteinander verbunden sind. Öffnungen in den die brandabschnittsbegrenzenden Wänden und Decken sind aus Gründen des Brandschutzes aber unzulässig. Daher dürfen Leitungen, Rohre und dergleichen durch diese Wände oder Decken nur hindurchgeführt werden, wenn gegen eine Brandübertragung durch diese Rohre hindurch besondere Vorkehrungen getroffen werden.

### STAND DER TECHNIK

Aus der DE-OS 43 21 307 ist eine Rohrmanschette bekannt, die aus mehreren Hülsenteilen besteht. Auf ihrer Innenseite ist ein unter Hitzeeinwirkung sich nach innen ausdehnendes feuerfestes Blähmaterial vorhanden. Um zu vermeiden, daß eine Körperschallübertragung zwischen dem Rohr und der das Rohr umgebenden Manschette auftreten kann, ist auf der Innenseite des Blähmaterials zusätzlich eine schallisolierende Schicht vorhanden. Die einzelnen Segmente der Rohrmanschette besitzen nach außen abgewinkelte Längsstege. Durch Verschrauben der aufeinanderliegenden Stegteile von umfangsmäßig benachbarten Segmenten wird die im Querschnitt kreisförmige Form der Rohrmanschette hergestellt. Die Rohrmanschette ragt mit dem Blähmaterial aus dem Decken- oder Wanddurchbruch heraus. Im Brandfall kann so die entstehende Hitze die freiliegende Manschette von außen erhitzen und dadurch das auf der Innenseite der Manschette vorhandene Blähmaterial wunschgemäß nach innen hin ausdehnen, so daß dadurch im Brandfall das Rohr zusammengequetscht und der Rohrquerschnitt verschlossen werden kann. Da die Manschette von außen frei liegt, kann das Verbinden der jeweiligen Stegteile der einzelnen Hülsenteile dieser Manschette über eine von außen leicht zugängliche Verschraubung erfolgen. Allerdings muß der zum Zusammenschrauben der Manschette benötigte Freiraum relativ groß sein. Bei Durchbrüchen von Wänden ist eine derartige Rohrmanschette auf beiden Seiten der Wand im Bereich des Durchbruchs vorhanden, um einen Rauch- und Feuerdurchtritt von einer Wandseite auf die andere Wandseite zu verhindern. Bei Deckendurchbrüchen kann ein Übertritt nur von unten nach oben durch den Deckendurchbruch hindurch erfolgen, so daß eine Rohrmanschette nur auf der Unterseite der Decke sinnvollerweise vorhanden sein muß.

In der EP-A-707168 (Stand der Technik gemäß Artikel 54(3) EPÜ) ist eine weitere aus mehreren Segmenten bestehende Rohrmanschette beschrieben, die ebenfalls aus der Durchbruchsöffnung der Wand oder Decke nach außen herausragt. Aufgrund der nach innen abgewinkelten Längsstege ihrer einzelnen Segmente, die mit einem um sie herum geführten Spannband aneinander befestigt werden können, ist der von der Manschette benötigte Freiraum innerhalb eines Durchbruchs wünschenswert klein.

### DARSTELLUNG DER ERFINDUNG

Ausgehend von diesem vorbekannten Stand der Technik liegt der Erfindung die Aufgabe zugrunde, eine verbesserte Rohrmanschette anzugeben.

Diese Erfindung ist durch die Merkmale des Hauptanspruchs gegeben. Ausgehend von einer Rohrmanschette mit einem unter Hitzeeinwirkungen nach innen ausdehnbaren, feuerfesten Blähmaterial, das auf ihrer Innenseite vorhanden ist, zeichnet sich die Erfindung dadurch aus, daß ein unter Hitzeeinwirkung sich auflösendes und/oder extrem wärmeleitfähiges Material auf der Außenseite der Manschette vorhanden ist. Eine derartige Manschette kann bündig und damit vollständig in einem Durchbruch vorgesehen werden. Dies hat den großen Vorteil, daß Rohre unmittelbar außerhalb eines Durchbruchs bereits abgebogen werden können. Bei den im Stand der Technik bekannten Rohrmanschetten muß das Rohr erst durch die Rohrmanschette vollständig hindurchgeführt werden, bevor es aus seiner Längsachse abgebogen weitergeführt werden kann. Dadurch ist ein unerwünscht großer Freiraum zwischen einem abgeknickten Rohr und der Außenkante der betreffenden Wand oder Decke erforderlich. Mit der erfindungsgemäßen Rohrmanschette ist dagegen eine Rohrführung unterhalb einer Decke oder neben einer Wand in relativ kleinem Abstand von denselben möglich. Um zu ermöglichen, daß die Hitze im Brandfall das im Inneren des Durchbruchs vorhandene Blähmaterial auch ausreichend rasch erhitzt, muß bei der in einem Durchbruch eingebauten Manschette auf ihrer Außenseite ein sich unter Hitzeeinwirkung auflösendes und/oder gut wärmeleitfähiges Material vorhanden sein. Die im Brandfall entstehende Hitze kann in dieses äußere Material von außerhalb der Wand oder Decke her nach und nach eindringen und die Manschette und damit auch das auf der Innenseite der Manschette vorhandene Blähmaterial wunschgemäß erhitzen.

Da die von außen auf die eingebaute Manschette einwirkende Hitze erst die äußere Materialschicht beseitigen oder beispielsweise durchdringen muß, ist das auf der Innenseite der Manschette vorhandene Blähmaterial auch nur in demjenigen Bereich der Manschette vorhanden, in dem außen das sich unter Hitzeeinwirkung auflösende Material vorhanden ist.

In diesem äußeren Material können Fehlbereiche planmäßig vorhanden sein. Obwohl durch diese Fehlbereiche das beim Einbauen der Manschette verwendete Gußmaterial mehr oder weniger dicht an die Außenseite der Manschette gelangen kann, ist trotzdem durch die die Manschette zumindest gitterartig umgebende äußere Materialschichtstruktur sichergestellt, daß das auf der Innenseite der Manschette vorhandene Blähmaterial sich ausreichend schnell erhitzen kann.

Das äußere Material ist vorzugsweise ein Schaumstoff.

Um den Halt der Rohrmanschette im Inneren eines Durchbruchs zu verbessern, besitzt die Rohrmanschette in ihrem oberen Bereich eine rauhe Außenfläche. Die Rauhigkeit kann beispielsweise durch eine aufgebrachte Kunststoffschicht hergestellt werden.

Die Manschette kann, wie im Stand der Technik bekannt, aus mehreren Segmenten zusammengesetzt sein, wobei die Segmente nach außen oder innen abgewinkelte Längsstege besitzen können. Um zu ermöglichen, daß diese Segmente einfach zusammengebaut werden können, kann vorgesehen sein, die einzelnen Segmente miteinander verrastbar oder verklinkbar aneinander zu befestigen. Dieses Verrasten oder Verklinken oder eine vergleichbare Befestigung können durch eine gegenseitige Relativbewegung der einzelnen Segmente in Längsrichtung der Manschette erfolgen. Dadurch können die derartigen Segmente beispielsweise außerhalb eines Durchbruchs um das Rohr herumgelegt werden, die Manschette dann in den Bereich des Durchbruchs hineingeschoben und durch anschließendes Verschieben von einem der beispielsweise zwei Segmenten die gegenseitige Befestigung der entsprechenden beiden Segmente erreicht werden. Die Verrast- oder Verklink-Organe können vorzugsweise im Bereich der Längsstege der einzelnen Segmente vorgesehen werden.

Weitere Merkmale und Vorteile der Erfindung sind den in den Ansprüchen ferner angegebenen Merkmalen sowie dem nachfolgenden Ausführungsbeispiel zu entnehmen.

### KURZE BESCHREIBUNG DER ZEICHNUNG

Die Erfindung wird im folgenden anhand des dargestellten Ausführungsbeispiels näher beschrieben und erläutert. Es zeigen:
- Fig. 1: eine in einem Deckendurchbruch montierte Rohrmanschette nach der Erfindung,
- Fig. 2: eine perspektivische Ansicht einer erfindungsgemäßen Rohrmanschette mit nach außen auskragenden Längsstegen,
- Fig. 3: eine perspektivische Detailansicht der Längsstege der Rohrmanschette gemäß Fig. 2, im nicht zusammengebauten Zustand,
- Fig. 4: eine perspektivische Darstellung einer Rohrmanschette nach der Erfindung mit nach innen abgewinkelten Längsstegen,
- Fig. 5: eine Schnittdarstellung der beiden Längsstege der Rohrmanschette nach Fig. 4, im nicht zusammengebauten Zustand,
- Fig. 6: eine Darstellung vergleichbar Fig. 5 mit den beiden ineinandergesteckten Längsstegen, und
- Fig. 7: eine Darstellung vergleichbar der von Fig. 1, mit zwei in einem Wanddurchbruch montierten Rohrmanschetten nach der Erfindung.

### WEGE ZUM AUSFÜHREN DER ERFINDUNG

Durch einen Durchbruch 10, der in einer Decke 12 rohbaumäßig vorgesehen worden ist, führt ein beispielsweise Kunststoffrohr 14 von unten nach oben hindurch.

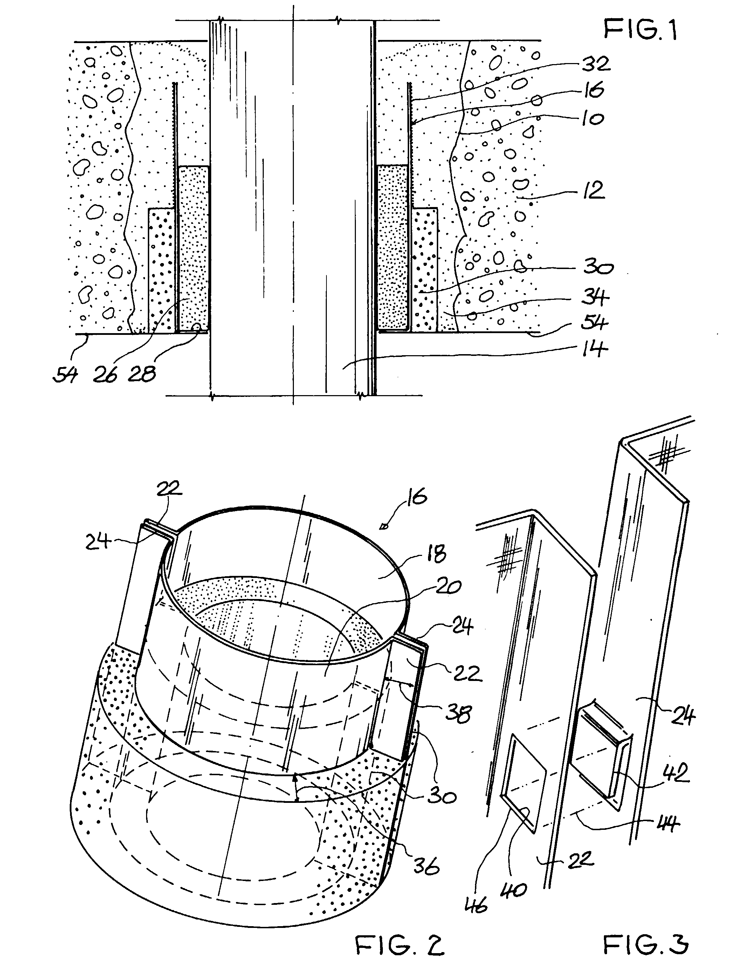

Um das Rohr ist eine Rohrmanschette 16 herumgelegt, wie sie beispielsweise in Fig. 1 dargestellt ist.

Die Rohrmanschette 16 besteht aus zwei Segmenten 18, 20, die jeweils an ihren freien Längskanten einen nach außen abgewinkelten Längssteg 22, 24 aufweisen.

Im Inneren der beiden Segmente 18, 20, und damit im Inneren der Manschette 16, ist ein sich unter Hitzeeinwirkung ausdehnendes Blähmaterial 26 vorhanden, das sich unten auf eine nach innen einspringende, umlaufende Schulter 28 der Segmente 18, 20 abstützt. Das Blähmaterial 26 ist lediglich im unteren Bereich der Rohrmanschette 16 vorhanden.

Auf der Außenseite der Segmente 18, 20, und damit auf der Außenseite der Rohrmanschette 16, ist ein sich unter Hitze auflösender Kunststoff angebracht. Dieser Kunststoff ist in diesem vorliegenden Fall ein Schaumstoff 30. Der Schaumstoff 30 schließt von unten her bündig mit der Schulter 28 ab und erstreckt sich in Längsrichtung der Manschette, im vorliegenden Beispielsfall gemäß Fig. 1, etwa bis in halbe Höhe der Manschette, das heißt etwa bis Dreiviertel der Höhe der Blähmaterial-Schicht 26.

Oberhalb des Schaumstoffes besitzt die Manschette 16 eine rauhe Außenfläche 32, die durch Auftragen eines geeigneten Kunststoffes hergestellt ist. Der Bereich zwischen dem Durchbruch 10 und der frei zugänglichen Außenseite des Rohres 14 ist nach Anordnen der Rohrmanschette 16 innerhalb des Durchbruchs 18 nachträglich mit einem Vergußmörtel oder Vergußbeton 34 ausgefüllt worden. Die Manschette 16 ist dadurch fest in dem Durchbruch 10 vorhanden. Im Brandfall wirkt die entstehende Hitze von unten her auf die Schaumstoff-Schicht 30 ein. Diese Kunststoffschicht löst sich dabei auf, so daß die Hitze von außen her den unteren Bereich der Rohrmanschette 16 und damit auch das auf der Innenseite der Rohrmanschette vorhandene Blähmaterial erhitzen kann.

Die auf der Außenseite der Rohrmanschette 16 vorhandene Schaumstoff-Schicht 30 besitzt im vorliegenden Beispielsfall eine Dicke 36, die in etwa der auskragenden Breite 38 der Längsstege 22, 24 der Segmente 18, 20 entspricht. Die Schaumstoff-Schichten 30 bilden bei der Ausbildung der Rohrmanschette gemäß Fig. 2 dadurch zwei halbkreisförmige Schalen.

Zum Zusammenbauen der beiden Segmente 18, 20, und damit zum Aneinanderbefestigen der beiden Segmente 18, 20, ist in dem einen Längssteg 22 ein Durchbruch 40 und in dem anderen Längssteg 24 eine nach unten auskragender Abwinkelung 42 vorhanden. Die Abwinkelung 42 und der Durchbruch 40 sind so positioniert und ausgebildet, daß die Abwinkelung 42 seitlich durch den Durchbruch hindurchgeschoben werden kann, so wie das in Fig. 5 durch die Pfeile 44 angedeutet ist. Durch anschließendes Verschieben des Längssteges 24 - im vorliegenden Beispielsfall nach unten - kann die Abwinkelung 42 die untere Begrenzungskante 46 des Durchbruchs 40 von oben her umgreifen. Dadurch können die beiden Längsstege 22, 24, und damit die beiden Segmente 18, 20, fest aneinanderbefestigt werden.

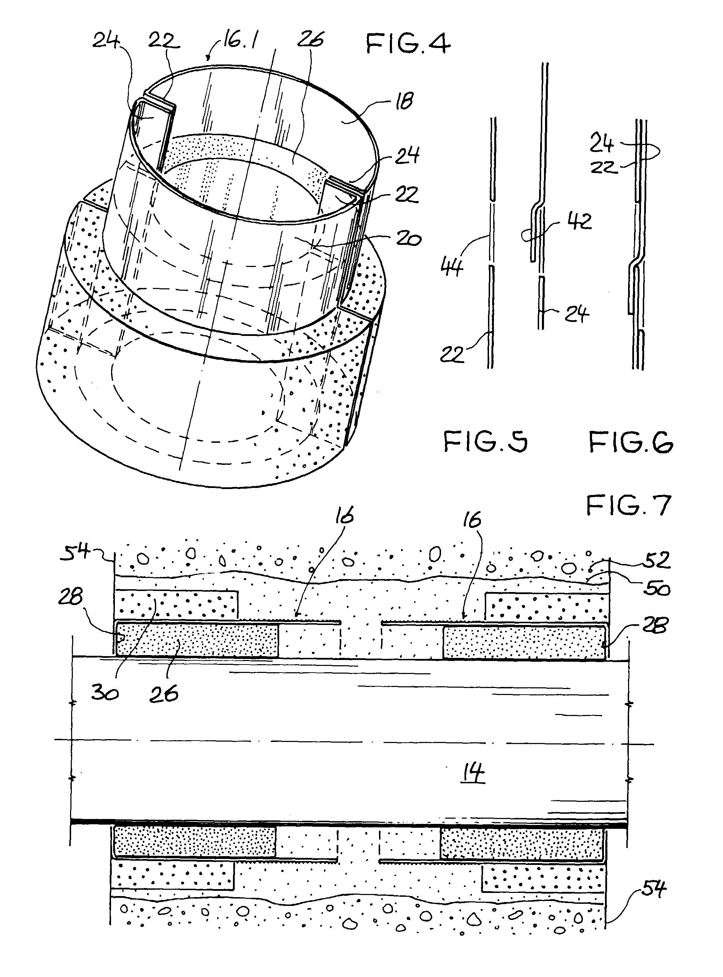

Während bei der Rohrmanschette entsprechend den Figuren 2 und 3 die Längsstege 22, 24 nach außen abgewinkelt vorhanden sind, sind bei der Rohrmanschette 16.1 (Fig. 4) die Längsstege 22, 24 nach innen abgebogen. Auf die Verriegelungsmöglichkeit der beiden Längsstege 18, 20 hat das keinen Einfluß. So ist ebenfalls in dem einen Längssteg 22 ein Durchbruch 44 und in dem anderen Längssteg 24 die Abwinkelung 42 vorhanden, so daß durch quer Aneinanderlegen der beiden Längsstege und anschließendes gegenseitiges Verschieben der beiden Längsstege zueinander die beiden Längsstege fest aneinanderbefestigt werden können (Fig. 5, 6).

In Fig. 7 ist ein Wanddurchbruch 50 innerhalb einer Wand 52 dargestellt, durch den ein Rohr 14 horizontal hindurchgeführt ist. Im Gegensatz zu der in Fig. 1 dargestellten Situation bei einem Durchbruch 10 in eine Decke 12 sind bei einem Durchbruch 50 durch eine Wand 52 hindurch nicht eine sondern zwei Rohrmanschetten 16 vorgesehen. Ein Feuerdurchtritt kann nämlich sowohl von links nach rechts als auch von rechts nach links durch den Durchbruch 50 hindurch erfolgen. Dadurch muß auf beiden Außenseiten des Durchbruches jeweils eine Abschottungsmaßnahme vorgesehen werden.

Diese Rohrmanschette 16 gemäß Fig. 7 entspricht der Rohrmanschette 16 des Durchbruchs 10. In beiden Fällen kann die Rohrmanschette 16 mit ihrer "unteren" Schulter 28 jeweils bündig mit der Außenseite 54 der Wand 52 bzw. der Decke 12 eingebaut werden. Dadurch ist es möglich, das Rohr 14 unmittelbar nach Verlassen des jeweiligen Durchbruches 10, 50 abgewinkelt weiterzuführen.

## Patentansprüche

1. Rohrmanschette (16) zum Abschotten von durch Wände (52) oder Decken (12) hindurchführenden Rohren (14), mit
- einem unter Hitzeeinwirkung nach innen ausdehnbaren, feuerfesten Blähmaterial (26), das auf der Innenseite der Manschette (16) vorhanden ist,
**dadurch gekennzeichnet**, daß
- ein unter Hitzeeinwirkung sich auflösendes und/oder extrem wärmeleitfähiges Material (30) auf der Außenseite der Manschette (16) vorhanden ist.

2. Rohrmanschette nach Anspruch 1,
**dadurch gekennzeichnet**, daß
- das äußere Material (30) im wesentlichen in demjenigen Bereich der Manschette (16) vorhanden ist, in dem auf der Innenseite der Manschette (16) das Blähmaterial (26) vorhanden ist.

3. Rohrmanschette nach Anspruch 1 oder 2,
**dadurch gekennzeichnet**, daß
- zumindest ein Fehlbereich in dem äußeren Material vorhanden ist.

4. Rohrmanschette nach einem der vorstehenden Ansprüche,
**dadurch gekennzeichnet**, daß
- das äußere Material (30) ein Schaumstoff ist.

5. Rohrmanschette nach einem der vorstehenden Ansprüche,
**dadurch gekennzeichnet**, daß
- in einem Endbereich der Manschette innenseitig das Blähmaterial (26) und außenseitig das äußere Material (30) vorhanden ist, und
- die Manschette (16) in ihrem anderen Endbereich außenseitig eine rauhe Außenfläche (32) besitzt.

6. Rohrmanschette nach einem der vorstehenden Ansprüche,
**dadurch gekennzeichnet**, daß
- die Manschette (16) aus mehreren Segmenten (18, 20) zusammensetzbar ist, wobei die Segmente (18, 20) nach außen oder innen abgewinkelte Längsstege (22, 24) besitzen.

7. Rohrmanschette nach Anspruch 6,
**dadurch gekennzeichnet**, daß
- die nach außen auskragende Breite (38) der Längsstege (22, 24) in etwa der Dicke (36) des äußeren Materials (30) entspricht.

8. Rohrmanschette nach einem der vorstehenden Ansprüche,
**dadurch gekennzeichnet**, daß
- ihre einzelnen Segmente (18, 20) miteinander verrastbar oder verklinkbar (40, 42) aneinander zu befestigen sind.

9. Rohrmanschette nach Anspruch 8,
**dadurch gekennzeichnet**, daß
- die einzelnen Segmente (18, 20) durch gegenseitige Relativbewegung in Längsrichtung der Manschette aneinander zu befestigen sind.

## Claims

1. Pipe sleeve (16) for partitioning off pipes (14) passing through walls (52) or ceilings (12), comprising a refractory expanding material (26) expandable towards the inside when exposed to heat provided on the inner face of the sleeve (16), characterised in that a material (30) which dissolves when exposed to heat and/or is extremely heat-conductive is provided on the outer face of the sleeve (16).

2. Pipe sleeve according to claim 1, characterised in that the outer material (30) is provided essentially in that region of the sleeve (16) in which the expanding material (26) is provided on the inner face of the sleeve (16).

3. Pipe sleeve according to claim 1 or claim 2, characterised in that at least one missed region is provided in the outer material.

4. Pipe sleeve according to one of the preceding claims, characterised in that the outer material (30) is a foam.

5. Pipe sleeve according to one of the preceding claims, characterised in that the expanding material (26) is provided on the inner face and the outer material (30) is provided on the outer face in one end region of the sleeve, and the sleeve (16) is provided on its outer face in its other end region with a rough outer surface (32).

6. Pipe sleeve according to one of the preceding claims, characterised in that the sleeve (16) can be assembled from a plurality of segments (18, 20), the segments (18, 20) each having longitudinal webs (22, 24) angled towards the outside or towards the inside.

7. Pipe sleeve according to claim 6, characterised in that the outwardly projecting width (38) of the longitudinal webs (22, 24) corresponds approximately to the thickness (36) of the outer material (30).

8. Pipe sleeve according to one of the preceding claims, characterised in that its individual segments (18, 20) are to be secured together in an interlocking or latching manner (40, 42).

9. Pipe sleeve according to claim 8, characterised in that the individual segments (18, 20) are to be secured together by mutual relative movement in the longitudinal direction of the sleeve.

## Revendications

1. Manchon (16) de tuyau pour le cloisonnement de tuyaux (14) traversant des parois (52) ou des plafonds (12) comportant :
- un matériau expansé réfractaire (26) pouvant se dilater vers l'intérieur sous l'effet de la chaleur, et qui est présent sur la face intérieure du manchon (16),
***caractérisé en ce qu*** 'un matériau (30) soluble sous l'effet de la chaleur et/ou extrêmement bon conducteur thermique est présent sur la face extérieure du manchon (16).

2. Manchon de tuyau selon la Revendication 1, ***caractérisé en ce que*** le matériau extérieur (30) est présent pour l'essentiel dans la zone du manchon (16) dans laquelle le matériau expansé (26) est présent sur la face intérieure du manchon (16).

3. Manchon de tuyau selon la Revendication 1 ou 2, ***caractérisé en ce qu'*** au moins un manque est présent dans le matériau extérieur.

4. Manchon de tuyau selon l'une quelconque des Revendications précédentes, ***caractérisé en ce que*** le matériau extérieur (30) est un matériau en mousse.

5. Manchon de tuyau selon l'une quelconque des Revendications précédentes, ***caractérisé en ce que*** le matériau expansé (26) est présent à l'intérieur et le matériau extérieur (30) à l'extérieur dans une zone d'extrémité du manchon, et ***en ce que*** le manchon (16) possède à l'extérieur une surface extérieure rugueuse (32) dans son autre zone d'extrémité.

6. Manchon de tuyau selon l'une quelconque des Revendications précédentes, ***caractérisé en ce que*** le manchon (16) peut se composer de plusieurs segments (18, 20), les segments (18, 20) possédant des plats longitudinaux (22, 24) recourbés vers l'extérieur ou vers l'intérieur.

7. Manchon de tuyau selon la Revendication 6, ***caractérisé en ce que*** la largeur (38) de saillie vers l'extérieur des plats longitudinaux (22, 24) correspond approximativement à l'épaisseur (36) du matériau extérieur (30).

8. Manchon de tuyau selon l'une quelconque des Revendications précédentes, ***caractérisé en ce que*** ses divers segments (18, 20) peuvent se fixer les uns aux autres par enclenchement ou encliquetage (40, 42).

9. Manchon de tuyau selon la Revendication 8, ***caractérisé en ce que*** les divers segments (18, 20) peuvent se fixer les uns aux autres par mouvement relatif mutuel dans la direction longitudinale du manchon.
